# EUROPÄISCHE PATENTSCHRIFT

(11) **EP 2 718 090 B1**
(45) Veröffentlichungstag und Bekanntmachung des Hinweises auf die Patenterteilung: **03.02.2016**
(21) Anmeldenummer: 12724917.5
(22) Anmeldetag: 30.05.2012
(51) Int. Cl.: B29C 53/08, B29C 53/84, B29B 13/02

(54) **VERFAHREN ZUM HERSTELLEN EINES GEBOGENEN THERMOPLASTISCHEN ROHRES**
METHOD FOR PRODUCING A BENT THERMOPLASTIC TUBE
PROCÉDÉ DE FABRICATION D'UN TUBE THERMOPLASTIQUE COUDÉ

(30) Priorität: 10.06.2011 DE 102011105279; 10.06.2011 US 201161495954 P
(43) Veröffentlichungstag der Anmeldung: 16.04.2014
(73) Patentinhaber: PFW Aerospace AG, 67346 Speyer (DE)
(72) Erfinder: KNEBL, Jürgen, 67435 Neustadt (DE); LÜTTMANN, Peter, 76698 Ubstadt-Weiher (DE); GROEL, Michael, 67346 Speyer (DE)
(74) Vertreter: Hörschler, Wolfram Johannes
(86) Internationale Anmeldenummer: PCT/EP2012/002297
(87) Internationale Veröffentlichungsnummer: WO 2012/167881

(56) Entgegenhaltungen:
- WO-A1-97/07969
- DE-A1- 3 727 717
- DE-A1- 3 939 352
- DE-A1- 4 215 920
- JP-A- 61 041 524
- JP-A- 61 084 223
- US-B1- 6 287 508

## Beschreibung

### Stand der Technik

Das Biegen von geraden Rohrstücken zu gebogenen Rohren mittels Pressbiegen, Walzbiegen oder Drei-Rollen-Schubbiegen ist im Maschinenbau bekannt. Bei der Herstellung von gebogenen Rohren für Rohrnetze ist das Erreichen hoher Fertigungspräzision oberstes Ziel. Hohe Fertigungspräzision äußert sich als Einhaltung enger Lagetoleranzen von Endbereichen von Rohren, welche ohne zusätzliche Biegebeanspruchung an ihrem bestimmungsgemäßen Ort eingebaut werden können. Insbesondere bei Rohrnetzen, in denen ein spannungsfreier Einbau aus technischen Gründen gewährleistet sein muss, ist die Herstellung mit hoher Genauigkeit zwingend geboten. Ferner äußert sich Fertigungspräzision bei gebogenen Rohren in einem Erhalt der Rundheit des gebogenen Rohrs. Abweichungen vom kreisförmigen Querschnitt eines Rohrs, Ovalität genannt, erschweren im Endquerschnitt die Verbindung mit einem anderen Rohr, an das das gebogene Rohr angeschlossen werden soll. Ferner bedingt Ovalität zwischen Endquerschnitten eines Rohrs, in dem Fluid unter wechselndem Druck geführt wird, eine niedrige Lebensdauer des Bereichs mit ovalem Querschnitt. Des Weiteren streben viele technische Bereiche, in denen gebogene Rohre zum Einsatz kommen, gewichtsparende Konstruktionen an, und zielen darauf ab, anstelle von Metallrohren Kunststoffrohre zu verwenden.

Aus GB 2 390 566 A ist ein Verfahren zum Biegen eines thermoplastischen Rohrs bekannt, bei dem ein thermoplastisches Rohr in einem beheizten Zustand um einen Biegekörper gebogen wird. Ein Infrarot-Strahlez dient hierbei zum Erwärmen des thermoplastischen Rohrs. Ferner wird das beheizte gebogene Rohr in einem abschließenden Schritt gekühlt. Nachteil dieses Verfahrens ist der hohe Wärmeverzug und die begrenzte Fertigungspräzision.

US 6,287,508 B1 bezieht sich auf ein Verfahren zur Herstellung von gebogenen, thermoplastischen Rohren. Ein rohrförmiger Gegenstand hat eine bestimmte dreidimensionale gebogene Konfiguration, wobei der Artikel einen im Wesentlichen kreisförmigen Querschnitt aufweiset, der sich über die gesamte Länge des gebogenen Artikels erstreckt. Die Enden des Artikels werden in geeignete Kupplungsstücke eingespannt, so dass der gebogene Artikel zwischen diesen Einspannelementen liegt. Die Kupplungselemente, die die Enden des gebogenen Artikels aufnehmen, können gegeneinander verspannt werden. Anschließend wird ein erwärmtes Fluid in den rohrförmigen Körper eingebracht, welches unter Druck steht. Mit dem unter Druck stehenden Fluid wird der rohrförmige Gegenstand vorverformt. Durch Aufbringen von mechanischem Druck auf die äußere Oberfläche der mit dem Fluid gefüllten Vorformlings in einem oder mehrere vorhergebestimmten Bereiche, wird der Vorformling in seine vorbestimmte dreidimensionale Konfiguration geführt.

WO 97/07969 A1 bezieht sich auf das Biegen von Rohren. Ein gebogenes Rohr wird aus einem wärmeempfindlichen thermoplastischen Material hergestellt. Dazu wird die Umfangswand des Rohres selektiv erwärmt, beispielsweise durch Hochfrequenzschwingungseinkopplung, wobei Teile der Umfangswand an der Innen- und der Außenseite der Biegung des gebogenen Rohres stärker erwärmt werden als die verbleibenden Teile der Umfangswand des Rohres.

DE 39 39 352 A1 bezieht sich auf eine Vorrichtung vom Biegen von kleinkalibrigen Rohrstücken aus thermoplastischen Kunststoffen. Es wird eine Vorrichtung zum Biegen von kleinkalibrigen Rohrstücken aus thermoplastischem Kunststoffen mit einer Biegeform offenbart, in welcher das Rohrstück bei Normaltemperatur einlegbar und verspannbar ist, und wenn eine Einrichtung zur Zuführung von Wärme, wobei das gebogene Rohrstück nach Abkühlen aus der Biegeform entnehmbar ist. Die Biegeform weist an zumindest mehreren im Verlauf der Biegelinie vorgesehenen Abschnitten jeweils eine Ausnehmung auf, deren Querschnittsform im unteren, mittleren und teilweise oberen Bereich dem Querschnitt des eingelegten Rohrstückes entspricht. Einzig der sich über die Biegelinie erstreckende Querschnitts- /Eingangsbereich ist kleiner gehalten als der Außendurchmesser des Rohrstücks und zwar in einem Größenverhältnis, bei dem das Rohrstück durch Quetschen beziehungsweise Verformen im elastischen Bereich des Rohrquerschnitts durch den kleineren Querschnitts- /Eingangsbereich hindurch passierbar wird und durch Rückfederung der Rohrwandung bei Auflegen auf dem unteren Querschnittsform-Bereich in der Ausnehmung arretierbar ist.

### Offenbarung der Erfindung

Das erfindungsgemäße Verfahren überwindet die Nachteile der aus dem Stand der Technik bekannten Verfahren. Das erfindungsgemäße Verfahren stellt eine Möglichkeit zur Herstellung eines gebogenen Rohrs aus thermoplastischem Material zur Verfügung. Das nach dem erfindungsgemäßen Verfahren hergestellte Rohr weist Endschnitte mit jeweils einem Mittelpunkt auf, die zueinander eine Lagetoleranz von maximal +/- 1 mm zueinander aufweisen. Das erfindungsgemäße Verfahren umfasst folgende Schritte:

Ein gerades Rohrelement wird in ein Werkzeug eingebracht, das einen Biegebereich aufweist, der beheizt ist. Des Weiteren wird ein Abschnitt des geraden Rohrelements erwärmt, der sich in dem Biegebereich des Werkzeugs befindet, in dem der Biegebereich beheizt wird. Der beheizte Abschnitt des geraden Rohrelements wird dabei auf eine Temperatur erwärmt, die die Glasübergangstemperatur des thermoplastischen Materials um einen ersten Temperaturwert übersteigt. Dabei stellt sich in einem Abschnitt des geraden Rohrelements eine Temperaturverteilung ein. Dabei liegen die höchsten Temperaturen in den Bereichen vor, die einen minimalen Abstand vom beheizten Biegebereich des Werkzeugs einnehmen. Des weiteren liegt in Bereichen des geraden Rohrelements, die auf einer dem Biegebereich entfernten Partie des Umfangs liegen, niedrige Temperaturen vor. In einem weiteren Schritt wird das gerade Rohrelement zu einem gebogenen Rohrelement gebogen, das einen Biegeradius aufweist, der durch die Form des Biegebereichs des Werkzeugs gewährleistet ist. Das Biegen des geraden Rohrelements zu einem gebogenen Rohrelement erfolgt um einen frei wählbaren Biegewinkel, der in einem bezüglich des Rohrs körperfesten xyz-Koordinatensystem eine räumliche Ausrichtung aufweist.

In einem weiteren Schritt wird das gebogene Rohrelement auf eine Temperatur abgekühlt, die um einen zweiten Temperaturwert unter der Glasübergangstemperatur des thermoplastischen Materials liegt. Beim Abkühlen erreichen alle Bereich des gebogenen Rohrelements eine Temperatur unterhalb der Glasübergangstemperatur, wobei die Temperaturverteilung aus dem Schritt, der das Beheizen umfasst, bei reduziertem Temperaturniveau in einer schwächer ausgeprägten Form erhalten bleibt. Ferner können die vorangegangenen Schritte an mindestens einer unterschiedlichen Stelle des gebogenen Rohrs wiederholt werden, wobei die jeweiligen räumlichen Ausrichtungen der Biegewinkel frei wählbar sind.

Das erfindungsgemäße Verfahren kann so ausgebildet sein, dass der erste Temperaturwert in einer Spanne von 5° bis 100°C liegt. Ferner kann das Verfahren so ausgebildet sein, dass der zweite Temperaturwert in einem Bereich von 5° bis 100°C liegt. Der beheizte Biegebereich des Werkzeugs kann mit einer elektrisch beheizten Flanke, Kanälen mit temperierter Flüssigkeit, die das Werkzeug durchziehen, einem Infrarotstrahler, einer Induktionsvorrichtung, oder einem Heißluftgebläse ausgestattet sein. Des Weiteren ist das erfindungsgemäße Verfahren so ausgebildet, dass der erste und der zweite Temperaturwert so eingestellt werden, dass das gebogene Rohr im erfindungsgemäßen Verfahren einen tolerierbaren Temperaturübergang mit minimalem Verzug erfährt. Ein tolerierbarer Temperaturübergang mit minimalem Verzug gewährleistet, dass das Mittelpunkte der Endquerschnitte des gebogenen Rohrs in einem Endzustand eine Lagetoleranz von +/-1 mm zueinander aufweisen und der Biegewinkel eine enge Toleranz von 0,5°, aufweist. Ferner ist der Schritt des erfindungsgemäßen Verfahrens, in dem das gerade Rohrelement zu einem gebogenen Rohrelement gebogen wird derart ausgebildet, dass der Biegewinkel in einem Toleranzbereich von maximal 0,5° liegt.

Der Schritt des erfindungsgemäßen Verfahrens, in dem das gebogene Rohrelement auf eine Temperatur abgekühlt wird, die um einen zweiten Temperaturwert unter der Glasübergangstemperatur des thermoplastischen Materials liegt, kann das Kühlen beispielsweise mittels Kaltluft, Flüssiggas oder Wasser erfolgen. Im erfindungsgemäßen Verfahren können der erste und der zweite Temperaturwert, der Biegewinkel und der Biegeradius aufeinander abgestimmt werden, so dass eine Verformung des Querschnitts des Rohrs in Richtung einer Ovalität verhindert wird. Sind der erste und zweite Temperaturwert und der Biegeradius aufeinander abgestimmt, bleibt im erfindungsgemäßen Verfahren die Rundheit des Rohrs erhalten. Dabei gewährleistet ein tolerierbarer Temperaturübergang, dass die Ovalität gering ist, vorzugsweise unter 7%, weiter bevorzugt unter 5%, besonders bevorzugt unter 3 %.

Darüber hinaus kann die Erfindung mindestens eine Meßeinrichtung aufweisen, mittels der die Temperatur eines Bereichs der Oberfläche des Rohrelements gemessen wird. Das Ergebnis der Meßeinrichtung wird an eine Steuereinheit weitergegeben, die mittels einer Regelung in die Steuerung der Heiz- und Kühleinrichtung eingreift. Die Steuereinheit gewährleistet eine Verarbeitungstemperatur in dem vermessenen Bereich der Oberfläche des Rohrelements, die die Glasübergangstemperatur des thermoplastischen Materials je nach Verfahrensschritt um den ersten oder zweiten Temperaturwert übersteigt bzw. darunter liegt.

Des Weiteren kann das erfindungsgemäße Verfahren so ausgebildet sein, dass durch das Biegeverfahren die Oberflächengüte einer Innen- und einer Außenseite des gebogenen Rohrs nicht beeinträchtigt wird. Das erfindungsgemäße Verfahren ist im Wesentlichen durch die Parameter des ersten und zweiten Temperaturwerts, des Biegeradius und des Biegewinkels charakterisiert. Der Erhalt der Oberflächengüte der Innenseite minimiert so den Rohrreibungswiderstand des gebogenen Rohrs. Ferner erleichtert der Erhalt der Oberflächengüte der Außenseite des gebogenen Rohrs einen Einbau des Rohrs in eine Umgebung mit Dämmmaterial. Dabei bleiben die Oberflächengüten der Innen- und Aussenseite im Wesentlichen gleich.

Ferner werden im erfindungsgemäßen Verfahren als thermoplastische Materialien Polyether-Ether-Keton, Polyether-Sulfon, Polyether-Keton, Polyphenylen-Sulfid oder Polyethylenimin eingesetzt.

In dem Schritt des erfindungsgemäßen Verfahren, in dem das gerade Rohrelement zu einen gebogenen Rohrelement gebogen wird, kann der Biegebereich von innen mit einem Hilfsmittel, vorzugsweise einem Dorn, mit Gasdruck oder einem wärmebeständigen kratzfesten Füllmaterial gestützt sein. Wärmebeständige kratzfeste Füllmaterialien sind insbesondere Glas- oder Stahlkugeln.

Ein darauf gebogenes Rohr ist aus thermoplastischem Material gefertigt und weist mindestens einen gebogenen Bereich auf. Der gebogene Bereich ist durch einen Biegeradius und einen Biegewinkel charakterisiert. Ferner weist das gebogene Rohr aus thermoplastischem Material Endquerschnitte mit jeweils einem Mittelpunkt auf, die in einem bezüglich des gebogenen Rohrs körperfestem xyz-Koordinatensystem in allen drei Koordinatenachsen in einem Abstand zueinander stehen. Die Abstände der Mittelpunkte der Endquerschnitte liegen dabei im Bereich einer Lagetoleranz von maximal +/- 1 mm. Gleichermaßen weist der Biegewinkel im gebogenen Bereich im Endzustand eine Toleranz von 0,5° auf. Eine Einhaltung der Toleranz des Biegewinkels und der Lagetoleranz der Mittelpunkte der Endquerschnitte gewährleistet einen lastfreien Einbau des gebogenen Rohrs.

Ferner kann das gebogene Rohr derart ausgebildet sein, im gebogenen Bereich einen Querschnitt mit geringer Abweichung der Rundheit des Rohrs aufweist, und bei einer Innendruckbeanspruchung des Rohres eine gleichmäßige Spannungsverteilung im Querschnitt des gebogenen Bereichs gewährleistet. Dabei weist der Rohrquerschnitt eine Ovalität von unter 7%, bevorzugt unter 5%, besonders bevorzugt unter 3% auf. Des weiteren kann das Rohr so ausgebildet sein, dass das Rohr im gebogenen Abschnitt auf dem gesamten Umfang eine Wandstärke aufweist, die unter 10% von der Wandstärke des geraden Abschnitts abweicht.

Das gebogene Rohr kann so ausgebildet sein, dass ein gebogener Abschnitt des gebogenen Rohres eine gleiche Oberflächengüte aufweist, wie ein gerader Abschnitt des gebogenen Rohres.

Das erfindungsgemäße Verfahren kann auf einer üblichen Biegevorrichtung durchgeführt werden, die nur in geringem Maße Modifikation erfordert. Im Wesentlichen ist in der üblichen Biegevorrichtung ein beheizter Biegebereich ausgebildet. Ferner verfügt eine übliche Biegevorrichtung über NC-gesteuerte Werkzeuge, die den Verfahrensschritt, der das Biegen eines geraden Rohrelements umfasst, durchführen. Das Durchführen des erfindungsgemäßen Verfahrens auf einer Biegevorrichtung mit NC-gesteuerten Werkzeugen gewährleistet reproduzierbare Verfahrensresultate.

### Vorteile der Erfindung

Das erfindungsgemäße Verfahren stellt eine Möglichkeit zur Verfügung, zuverlässig und kostengünstig gebogene Rohre aus thermoplastischem Material herzustellen, die hohe Präzisionsanforderungen, wie zum Beispiel in Luftfahrzeugzulassungsvorschriften gefordert, erfüllen. In zahlreichen technischen Bereichen ist die Verwendung von Rohren aus thermoplastischem Material der von Metallrohren aufgrund des Gewichtsvorteils vorzuziehen. Das Einhalten enger Fertigungstoleranzen erlaubt, Endquerschnitte eines Rohrs und deren Mittelpunkte, in exakt definierte Relativposition zueinander zu bringen. Dadurch ist die Möglichkeit gegeben, einen spannungsfreien Einbau durchzuführen. Ein Rohr, das spannungsfrei eingebaut ist, unterliegt keiner Vorbeanspruchung und ist dadurch unempfindlicher gegen betriebsbedingte Lastwechsel. Ferner werden Lasten, die eine Struktur des Einbauraums einwirken, vermieden. Für zahlreiche Anwendungen, wie zum Beispiel den Flugzeugbau, ist diese Anforderung unerlässlich, so dass das erfindungsgemäße Verfahren für zahlreiche technische Bereiche, die hohe Präzisionsanforderungen stellen, gewichtsparende Rohre aus thermoplastischem Material zur Verfügung stellt.

Gemäß dem erfindungsgemäßen Verfahren wird ein gerades Rohrelement in einem ersten Schritt um einen Wert aus einer Spanne von 5 bis 100°C über die Glasübergangstemperatur des thermoplastischen Materials erwärmt. Das thermoplastische Material weist nach Überschreiten der Glasübergangstemperatur eine gute Verformbarkeit auf. Bereits bei einem Überschreiten der Glasübergangstemperatur um einen geringen Temperaturwert liegt Verformbarkeit des thermoplastischen Materials vor, die mit weiterer Temperaturerhöhung ansteigt. Des Weiteren liegt die Verformbarkeit des thermoplastischen Materials bei einer Temperatur unterhalb der Glasübergangstemperatur nicht mehr vor. Auf eine weitergehende Abkühlung kann deshalb zur Energieeinsparung verzichtet werden. Ferner gewährleistet eine kontinuierliche Messung und Regelung der Temperatur an der Oberfläche des Rohrelements seine gute Verformbarkeit im gesamten zu biegenden Abschnitt des Rohrelements. Die Messung der Temperatur der Oberfläche kann hierbei mittels Thermofühler durchgeführt werden. Darüber hinaus stellt eine Auswahl von Temperaturwerten, die zwischen 50 und 100°C über bzw. unter der Glasübergangstemperatur des thermoplastischen Materials liegen, einen tolerierbaren Temperaturübergang des Rohrs im Verfahren dar. Ein tolerierbarer Temperaturübergang gewährleistet im erfindungsgemäßen Verfahren eine Minimierung des thermischen Verzugs des Rohrs. Ein minimaler thermischer Verzug mindert die Abweichung von der angestrebten Verformung und erhöht die Fertigungspräzision. Lagetoleranzen der Mittelpunkte der Endquerschnitte von max. +/-1 mm und Toleranzen des Biegewinkels von unter 0,5° werden dadurch ermöglicht.

Des Weiteren reduziert ein derartiger Temperaturübergang des thermoplastischen Materials im erfindungsgemäßen Verfahren den Bedarf an Heiz- und Kühlleistung und erhöht die mögliche Prozessgeschwindigkeit.

Ferner gewährleistet das erfindungsgemäße Verfahren, das mittels des Verfahrens hergestellte Rohre eine minimale Ovalität aufweisen. Eine minimale Ovalität, und damit ein hoher Grad an Rundheit gewährleistet, dass sich im Rohrquerschnitt bei einer Innendruckwechselbelastung ein über den Umfang des Rohrs gleichmäßiger Spannungszustand einstellt. Ein gleichmäßiger Spannungszustand ist frei von Spannungsspitzen, die an den Stellen, an denen sie auftreten, hohe Materialbeanspruchungen verursachen und so die Lebensdauer des Rohrs reduzieren. Eine Ovalität von unter 3% gewährleistet dabei eine Lebensdauer gebogener Abschnitte, die im Wesentlichen identisch ist mit der Lebensdauer gerader Abschnitte. Grundsätzlich fällt die Ovalität umso geringer aus, je größer der Biegeradius 18 ist Ovalisierte Querschnitte weisen ferner eine niedrigere Querschnittsfläche auf als die kreisförmigen Querschnitte, aus denen sie entstehen. Dadurch wird eine Fluidströmung in einem ovalisierten Bereich beschleunigt. Eine erhöhte Geschwindigkeit einer Fluidströmung in einem Rohr verursacht zusätzlichen Strömungswiderstand und damit zusätzlichen Druckverlust. Das erfindungsgemäße Verfahren minimiert diese nachteiligen Effekte.

Des Weiteren findet beim Überschreiten der Glasübergangstemperatur in einem thermoplastischen Kunststoff ein Übergang von einem spröden energieelastischen Verhalten zu einem weichen entropieelastischen Verhalten des thermoplastischen Kunststoffs statt. Thermoplastische Kunststoffe, die sich entropieelastisch verhalten, weisen eine hohe Umformbarkeit auf und zeigen praktisch keine Rückstellkräfte gegen äussere mechanische Einwirkungen. Umformbarkeit ohne wesentliche Rückstellkräfte erlaubt, den thermoplastischen Kunststoff bei geringem Kraftaufwand präzise zu verformen. Das erfindungsgemäße Verfahren gewährleistet präzise Umformbarkeit bezüglich Biegeradien und Biegewinkel. Präzise Biegeradien und Biegewinkel erlauben somit, die Mittelpunkte der Endquerschnitte eines mithilfe des erfindungsgemäßen Verfahrens verarbeiteten Rohrs in eine Relativposition zueinander zu bringen, die innerhalb enger Lagetoleranzen liegt.

Das erfindungsgemäße Verfahren ist nicht darauf beschränkt, an einem Rohr nur Biegungen anzubringen, die in einer gemeinsamen Ebene liegen. Ferner wird durch das erfindungsgemäße Verfahren eine geometrische Variabilität der herzustellenden gebogenen Rohre gewährleistet. Wird das zu verarbeitende Rohr nach einem vorherigen Durchgang des erfindungsgemäßen Verfahrens um die Rohrlängsachse um einen beliebigen definierten Winkel gedreht, ist es möglich, in einem weiteren Durchgang des erfindungsgemäßen Verfahrens das zu verarbeitende Rohr mit einer weiteren Biegung zu versehen. Die weitere Biegung des zu verarbeitenden Rohrs kann hierbei in einer anderen Ebene liegen als die vorherige Biegung. Rohrlängsachsen gerader Rohrabschnitte zeigen hierbei in beliebige räumliche Richtungen.

Darüber hinaus stellt das erfindungsgemäße Verfahren eine Möglichkeit zur Verfügung, gebogene thermoplastische Rohre herzustellen, bei denen in den gebogenen Bereichen lediglich in geringem Maß Dehn- und Stauch-Effekte auftreten. Dabei bleibt die Wandstärke eine gebogenen thermoplastischen Rohrs in den gebogenen Bereichen praktisch konstant. Eine konstante Wandstärke gewährleistet bei einer Innendruckbeanspruchung des Rohrs eine gleichmäßige Spannungsverteilung. Die Wandstärke in einem gebogenen Abschnitt des Rohrs weicht von einem geraden Abschnitt um maximal 10 % ab. Dadurch wird das Auftreten von Spannungsspitzen vermieden und die Lebensdauer des gebogenen Bereichs des gebogenen thermoplastischen Rohrs gesteigert.

Ferner ist das erfindungsgemäße Verfahren einfach und auf üblichen Biegevorrichtungen mit einfachen Modifikationen durchführbar. Dadurch erhöht das erfindungsgemäße Verfahren die Zahl der Möglichkeiten zur Herstellung gebogener thermoplastischer Rohre und ist einfach umsetzbar.

Des Weiteren weisen übliche Biegevorrichtungen heute NC-gesteuerte Werkzeuge auf, die das erfindungsgemäße Verfahren durchführen können. Die NC-gesteuerten Werkzeuge erlauben, Prozessparameter wie z.B. Biegewinkel und Biegegeschwindigkeit einzustellen Ferner gewährleistet der Gebrauch von NC-gesteuerten Werkzeugen, dass das erfindungsgemäße Verfahren automatisch durchführbar ist und reproduzierbare Resultate erzeugt. Das erfindungsgemäße Verfahren verbessert die Prozessfähigkeit beim Biegen von thermoplastischen Rohren.

### Kurze Beschreibung der Zeichnungen

In den folgenden Figuren wird die Erfindung schematisch dargestellt. Die Figuren stellen folgendes im Einzelnen dar:
Fig. 1 zeigt ein gemäß dem erfindungsgemäßen Verfahren gebogenes Rohr
Fig. 2 zeigt ein Rohrelement vor und nach dem erfindungsgemäßen Verfahren
Fig. 3 zeigt ein gemäß dem erfindungsgemäßen Verfahren gebogenes Rohr mit dreidimensionaler Ausrichtung der Abschnitte
Fig. 4 zeigt ein Ablaufdiagramm des erfindungsgemäßen Verfahrens

### Ausführungsformen der Erfindung

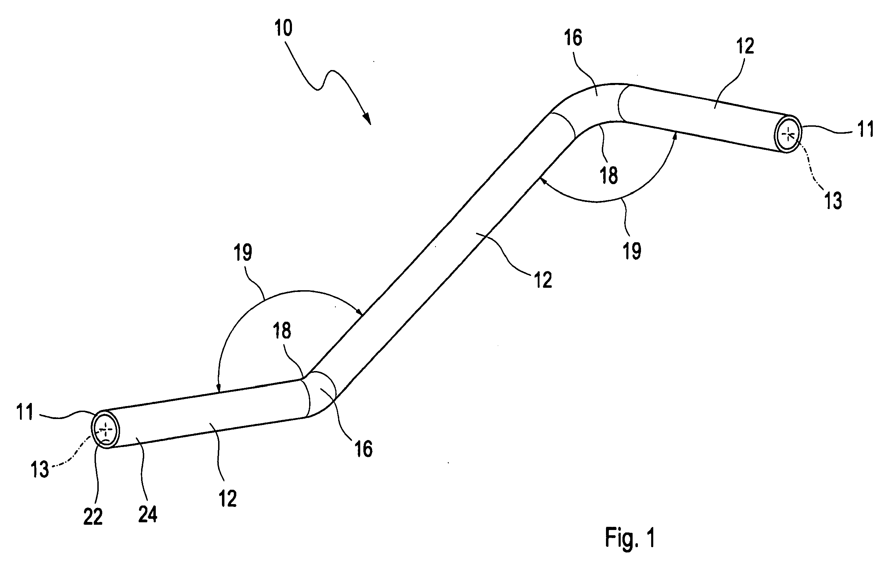

Der Figur 1 ist eine schematische Darstellung eines Rohrs 10, das mit dem erfindungsgemäßen Verfahren hergestellt wurde, zu entnehmen. Das gebogene Rohr 10 weist Endquerschnitte 11 auf, die jeweils über einen Mittelpunkt 13 verfügen. Die Endquerschnitte 11 verfügen über einen kreisförmigen Querschnitt. Das Rohr 10 verfügt über gerade Abschnitte 12 und gebogene Abschnitte 16. Ein gebogener Abschnitt 16 ist durch einen Biegeradius 18 und einen Biegewinkel 19 charakterisiert. Das Rohr 10 verfügt ferner über eine Innenseite 22 und eine Außenseite 24. Ferner liegen die Längsachsen der geraden Abschnitte 12 in räumlich unterschiedlichen Ebenen. Ferner sind die geraden Abschnitte 12, die in den Endquerschnitten 13 enden, so ausgebildet, dass die Längsachsen der geraden Abschnitte 12 mit Längsachsen weiterer, nicht abgebildeter, Rohre, mit dem das gebogene Rohr 10 zu verbinden ist, fluchten.

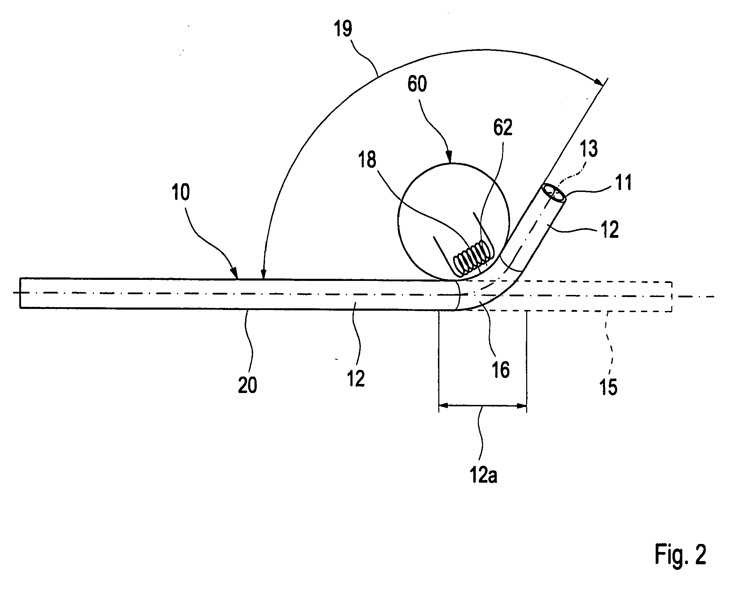

Figur 2 stellt schematisch das erfindungsgemäße Verfahren zum Biegen eines thermoplastischen Rohrs dar. Hierzu wird in einem ersten Schritt das gerade Rohrelement 15 in das Werkzeug 60 eingebracht, das einen beheizbaren Biegebereich 62 aufweist. In einem folgenden, nicht dargestellten, Schritt wird durch Beheizen des Biegebereichs 62 der Abschnitt 12a des geraden Rohrelements 15 erwärmt, der an den Biegebereich 62 anliegt. In einem weiteren, nicht dargestellten Schritt, wird die Glasübergangstemperatur des thermoplastischen Materials, aus dem das gerade Rohrelement 15 gefertigt ist, um 5 bis 100° C überschritten. Das Überschreiten der Glasübergangstemperatur des thermoplastischen Materials bewirkt einen Übergang von sprödem energieelastischem Verhalten zu weichem entropieelastischem Verhalten. Dabei wird eine Umformbarkeit des thermoplastischen Materials erzielt, die die Durchführbarkeit des folgenden Schritts gewährleistet. In einem weiteren Schritt wird das gerade Rohrelement 15 anliegend an den Biegebereich 62 um den Biegeradius 18, der durch die Form des Werkzeugs 60 definiert ist, gebogen Der beheizte Abschnitt 12a wird dabei zum gebogenen Abschnitt 16 umgeformt. Ferner erfolgt das Biegen um den Biegebereich 62 des Werkszeugs 60 um einen Biegewinkel 19, der frei gewählt werden kann. Der Biegewinkel 19 definiert ferner die Lage der geraden Abschnitte 12 zueinander. Das gerade Rohrelement 15 wird hierdurch zum gebogenen Rohrelement 20. Dabei wird das zu biegende gerade Rohrelement 15 von einem nicht dargestellten Hilfsmittel von innen gestützt. In einem weiteren Schritt wird das gebogene Rohrelement 20, im Biegebereich 18 abgekühlt. Durch das Abkühlen wird im gebogenen Bereich 16 eine Temperatur erreicht, die 5 bis 100° C unter der Glasübergangstemperatur des thermoplastischen Materials liegt. Hierbei findet ein Übergang des thermoplastischen Materials von weichem entropieelastischem Verhalten zu sprödem energieelastischem Verhalten statt.

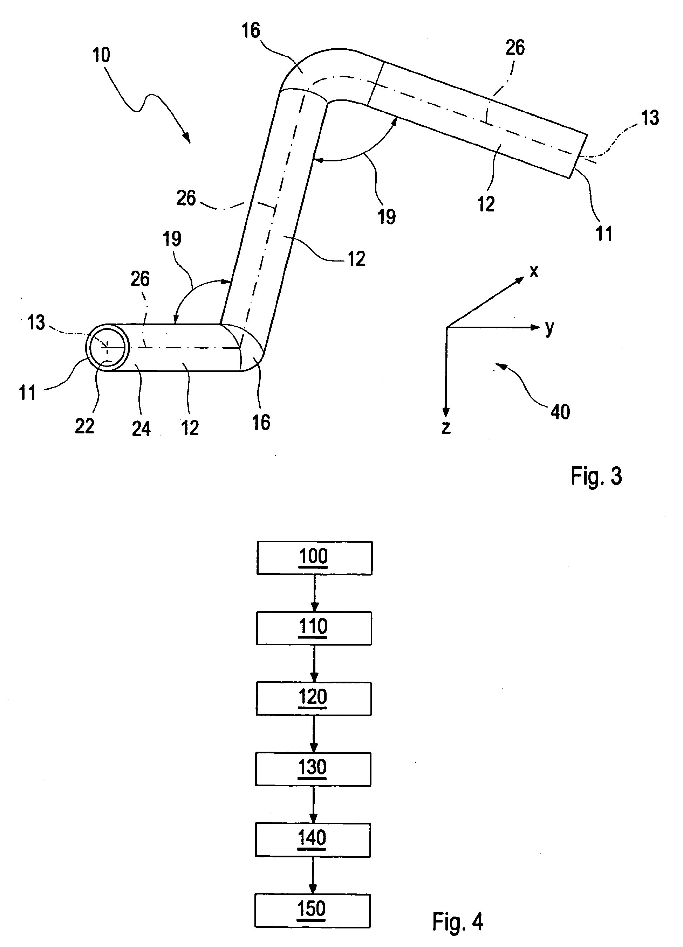

Figur 3 stellt schematisch ein gebogenes Rohr 10 dar, bei dem die Biegewinkel 19 unterschiedliche räumliche Ausrichtungen aufweisen. Die Mittelpunkte 13 der Endquerschnitte 11 sind entlang der x-, y- und z-Achse eines Koordinatensystems 40 relativ zueinander beabstandet. Das gebogene Rohr 10 weist in jedem geraden Abschnitt 12 eine Längsache 26 auf. Die Längsachsen 26 liegen weisen zueinander eine räumliche Ausrichtung auf. Des Weiteren fluchten die Längsachsen 26 der geraden Abschnitte 12, die in Endquerschnitte 11 enden, mit Längsachsen von nicht dargestellten Rohren, mit denen das gebogene Rohr 10 zu verbinden ist.

Figur 4 stellt das erfindungsgemäße Verfahren in einem Ablaufdiagramm dar. Ausgangszustand 100 ist hierbei das gerade Rohrelement 15. Dieses wird in einem ersten Schritt 110 in das Werkzeug 60 eingebracht. Der im Werkzeug 60 ausgebildete beheizbare Biegebereich 62 liegt hierbei an den Bereich 12a des geraden Rohrelements 15 an, der zu biegen ist.

Ferner wird im Schritt 110 der Bereich 12a des geraden Rohrelements 15 durch den beheizbaren Beigebereich 62 erwärmt. Die Erwärmung nach dem ersten Schritt 110 wird bis zu einer bestimmten Temperatur durchgeführt. Der erste Schritt 110 geht hierbei in den zweiten Schritt 120 über, in dem der Bereich 12a des geraden Rohrelements 15 die Glasübergangstemperatur des thermoplastischen Materials, aus dem es gefertigt ist, um einen ersten Temperaturwert übersteigt. Der erste Temperaturwert liegt hierbei zwischen 5 und 100 °C. Ferner findet im zweiten Schritt 120 im thermoplastischen Material ein Übergang von einem spröden energieelastischen Verhalten zu einem weichen entropieelastischen Verhalten statt. Der Übergang zu weichem entropieelastischem Verhalten gewährleistet eine Umformbarkeit des geraden Rohrelements 15, die für den darauf folgenden dritten Schritt 130 erforderlich ist.

Beim dritten Schritt 130 wird das gerade Rohrelement 15 um den Biegebereich 62 des Werkzeugs 60 verbogen. Der Bereich 12a, dessen Temperatur 5 bis 100°C über der Glasübergangstemperatur liegt, wird hierbei zum Biegebereich 16 umgeformt. Der Biegebereich 16 ist durch den Biegeradius 18 und den Biegewinkel 19 charakterisiert. Dabei ist der Biegeradius 18 durch die Kontur des Werkzeugs 60 bedingt. Der Biegewinkel 19 kann frei gewählt werden. Der Biegewinkel 19 legt fest, in welcher Relativposition sich die Mittelpunkte 13 der Endquerschnitte 11 der geraden Abschnitte 12 zueinander befinden. Der gebogene Bereich 16 liegt hierbei zwischen den geraden Rohrabschnitten 12. Ferner kann der Biegewinkel 19 derart exakt eingestellt werden, dass die Lagetoleranz der Mittelpunkte 13 der Endquerschnitte 11 die Anforderungen von Luftfahrzeugzulassungsvorschriften erfüllen. Darüber hinaus ist der Biegewinkel 19 derart exakt einstellbar, dass die Rohrlängsache 26 eines geraden Rohrabschnitts 12, der in einen Endquerschnitt 11 mündet, mit einer Rohrlängsache eines anderen Rohres fluchtet, mit dem das gebogene Rohrelement 20 zu verbinden ist.

Ferner werden die Parameter des ersten Temperaturwerts, des Biegeradius 18 und des Biegewinkels 19 aufeinander abgestimmt, um eine Ovalisierung eines kreisförmigen Querschnitts des geraden Rohrelement 15 im Bereich 12a zu vermeiden.

In einem weiteren Schritt 140 wird das gebogene Rohrelement 20 im gebogenen Abschnitt 16 abgekühlt. Beim Schritt 140 wird die Glasübergangstemperatur des thermoplastischen Materials, aus dem das gebogene Rohrelement 20 gefertigt ist, und 5 bis 100°C unterschritten. Dabei findet im thermoplastischen Material ein Übergang von weichem entropieelastischem zu spröde energieelastischem Verhalten statt. Die Umformbarkeit des gebogenen Rohrelements 20 geht dadurch weitestgehend zurück. Nach dem vierten Schritt 140 bleibt das gebogene Rohrelement 20 im Wesentlichen frei von Verzug. Das gebogene Rohrelement 15 erfüllt dabei im Endzustand 150 bezüglich der Lagetoleranz der Mittelpunkte 13 der Endquerschnitt 11 die Anforderungen einer Lagetoleranz von +/- 1 mm. Gleichermaßen erfüllt das gebogene Rohrelement 15 die Anforderung einer Toleranz des Biegewinkels von 0,5° und weist eine Ovalität von unter 3% auf. Die Wandstärke des Rohrelements 15 weicht in den gebogenen Abschnitten 16 um maximal 10% von der Wandstärke in einem geraden Abschnitt 12 ab.

## Patentansprüche

1. Verfahren zur Herstellung eines gebogenen Rohrs (10) aus thermoplastischem Material mit Endquerschnitten (11), deren Mittelpunkte (13) zueinander eine Lagetoleranz von maximal +/- 1 mm zueinander aufweisen, umfassend die Schritte:
a) Einbringen eines geraden Rohrelements (15) in ein Werkzeug (60), das in einem Biegebereich (62) beheizt ist,
b) Erwärmen eines Abschnitts (12a) des geraden Rohrelements (15), welcher sich in dem Biegebereich (62) befindet
c) Beheizen des Biegebereichs (62) auf eine Temperatur, die um einen ersten Temperaturwert über der Glasübergangstemperatur des thermoplastischen Materials liegt,
d) Biegen des geraden Rohrelements (15) um den beheizten Biegebereich (62) des Werkzeugs (60) um einen Biegeradius (18), der durch die Form des Werkzeugs (60) gewährleistet wird, um einen frei wählbaren Biegewinkel (19), der in einem bezüglich des Rohrs (10) körperfestem xyz-Koordinatensystem eine räumliche Ausrichtung aufweist,
e) Abkühlen des nach Schritt d) gebogenen Rohrelements (20) um einen zweiten Temperaturwert unter die Glasübergangstemperatur des thermoplastischen Materials, wobei
im Schritt c) für den Biegewinkel ein Toleranzbereich von max. 0,5° eingehalten wird, und nach Schritt e) der Biegewinkel (19) im gebogenen Bereich weiterhin eine Toleranz von 0,5° aufweist, und
das thermoplastische Material Polyether-Ether-Keton, Polyether-Sulfon, Polyether-Keton, Polyphenylen-Sulfid, oder Polyethylenimin ist.

2. Verfahren nach Anspruch 1, **dadurch gekennzeichnet, dass** die Schritte a) bis e) mindestens einmal an einer unterschiedlichen Stelle des gebogenen Rohrs (10)
wiederholt werden, und die räumlichen Ausrichtungen der Biegewinkel (19) unterschiedlich sind.

3. Verfahren nach Anspruch 1 oder 2, **dadurch gekennzeichnet, dass** der erste Temperaturwert in einem Bereich von 5° bis 100° C liegt.

4. Verfahren nach einem der Ansprüche 1 bis 3, **dadurch gekennzeichnet, dass** der zweite Temperaturwert in einem Bereich von 5° bis 100° C liegt.

5. Verfahren nach einem der Ansprüche 1 bis 4, **dadurch gekennzeichnet, dass** das der beheizte Biegebereich (62) des Werkzeugs (60) eine elektrische beheizte Flanke, Kanäle mit temperierter Flüssigkeit, einen Infrarot-Strahler, eine Induktionsvorrichtung oder ein Heißluft-Gebläse aufweist.

6. Verfahren nach einem der Ansprüche 1 bis 5, **dadurch gekennzeichnet, dass** der erste und der zweite Temperaturwert einen tolerierbaren Temperaturübergang mit minimalem Verzug des gebogenen Abschnitts des gebogenen Rohrs (10) gewährleisten.

7. Verfahren nach einem der Ansprüche 1 bis 6, **dadurch gekennzeichnet, dass** im Schritt d) zum Abkühlen des gebogenen Rohrs (10) Kaltluft, Flüssiggas, ein gekühltes Werkzeug (60), oder Wasser verwendet wird.

8. Verfahren nach einem der Ansprüche 1 bis 7, **dadurch gekennzeichnet, dass** der erste und zweite Temperaturwert und der Biegeradius aufeinander abgestimmt sind, und die Rundheit des Rohrs (10) erhalten bleibt, wobei die Ovalität unter 7%, bevorzugt unter 5%, besonders bevorzugt unter 3% liegt.

9. Verfahren nach einem der Ansprüche 1 bis 8, **dadurch gekennzeichnet, dass** eine Innenseite (22) und eine Außenseite (24) des gebogenen Rohrs (10) eine gleiche Oberflächengüte aufweisen.

10. Verfahren nach einem der Ansprüche 1 bis 9, **dadurch gekennzeichnet, dass** im Schritt d) der Biegebereich (62) durch ein Hilfsmittel von innen gestützt wird.

11. Verfahren nach Anspruch 10, **dadurch gekennzeichnet, dass** das Hilfsmittel ein Dom, Gasdruck oder ein wärmebeständiges kratzfreies Füllmaterial ist, insbesondere Glas- oder Stahlkugeln.

## Claims

1. Method for producing a bent pipe (10) from thermoplastic material with end cross-sections (11), the central points (13) of which have in relation to one another a positional tolerance of at most +/-1 mm in relation to one another, comprising the steps of:
a) introducing a straight pipe element (15) into a tool (60), which is heated in a bending region (62),
b) heating a portion (12a) of the straight pipe element (15) that is located in the bending region (62),
c) heating the bending region (62) to a temperature which lies above the glass transition temperature of the thermoplastic material by a first temperature value,
d) bending the straight pipe element (15) about the heated bending region (62) of the tool (60) by a bending radius (18) that is ensured by the form of the tool (60), by a freely selectable bending angle (19), which has a spatial alignment in an xyz system of coordinates that is fixed with respect to the pipe (10),
e) cooling the pipe element (20) bent after step d) below the glass transition temperature of the thermoplastic material by a second temperature value, wherein,
in step c), a tolerance range of at most 0.5° is maintained for the bending angle, and, after step e), the bending angle (19) in the bent region still has a tolerance of 0.5°, and
the thermoplastic material is polyether ether ketone, polyether sulphone, polyether ketone, polyphenylene sulphide or polyethyleneimine.

2. Method according to Claim 1, **characterized in that** steps a) to e) are repeated at least once at a different location of the bent pipe (10), and the spatial alignments of the bending angles (19) are different.

3. Method according to Claim 1 or 2, **characterized in that** the first temperature value lies in a range from 5° to 100°C.

4. Method according to one of Claims 1 to 3, **characterized in that** the second temperature value lies in a range from 5° to 100°C.

5. Method according to one of Claims 1 to 4, **characterized in that** the heated bending region (62) of the tool (60) has an electrically heated flank, channels with temperature-controlled liquid, an infrared emitter, an induction device or a hot-air blower.

6. Method according to one of Claims 1 to 5, **characterized in that** the first and second temperature values ensure a tolerable temperature transition with minimal distortion of the bent portion of the bent pipe (10).

7. Method according to one of Claims 1 to 6, **characterized in that**, in step d), cold air, liquefied gas, a cooled tool (60) or water is used for cooling the bent pipe (10).

8. Method according to one of Claims 1 to 7, **characterized in that** the first and second temperature values and the bending radius are coordinated with one another, and the roundness of the pipe (10) is maintained, the ovality being less than 7%, preferably less than 5%, particularly preferably less than 3%.

9. Method according to one of Claims 1 to 8, **characterized in that** an inner side (22) and an outer side (24) of the bent pipe (10) have a surface quality that is the same.

10. Method according to one of Claims 1 to 9, **characterized in that**, in step d), the bending region (62) is supported from the inside by an auxiliary means.

11. Method according to Claim 10, **characterized in that** the auxiliary means is a mandrel, gas pressure or a heat-resistant scratchproof filling material, in particular glass or steel beads.

## Revendications

1. Procédé pour la fabrication d'un tube coudé (10) en matériau thermoplastique présentant des sections transversales d'extrémité (11), dont les points centraux (13) présentent, l'un par rapport à l'autre, une tolérance de position d'au maximum +/- 1 mm l'un par rapport à l'autre, comprenant les étapes de :
a) introduction d'un élément tubulaire droit (15) dans un outil (60), qui est chauffé dans une zone de pliage (62),
b) chauffage d'une section (12a) de l'élément tubulaire droit (15), qui se trouve dans la zone de pliage (62)
c) chauffage de la zone de pliage (62) à une température qui se situe à une première valeur de température au-dessus de la température de transition vitreuse du matériau thermoplastique,
d) pliage de l'élément tubulaire droit (15) autour de la zone de pliage chauffée (62) de l'outil (60) à un rayon de pliage (18), qui est assuré par la forme de l'outil (60), autour d'un angle de pliage (19) pouvant être choisi librement, qui présente une orientation spatiale dans le système de coordonnées xyz intrinsèque par rapport au tube (10),
e) refroidissement de l'élément tubulaire (20) coudé après l'étape d) d'une deuxième valeur de température en dessous de la température de transition vitreuse du matériau thermoplastique, une plage de tolérance d'au maximum 0,5° étant respectée dans l'étape c) pour l'angle de pliage et l'angle de pliage (19) présentant, après l'étape e), dans la zone coudée, en outre une tolérance de 0,5°, et
le matériau thermoplastique étant une polyéther-éther-cétone, une polyéthersulfone, une polyéthercétone, un poly(sulfure de phénylène) ou une polyéthylèneimine.

2. Procédé selon la revendication 1, **caractérisé en ce que** les étapes a) à e) sont répétées au moins une fois en un endroit différent du tube coudé (10) et les orientations spatiales des angles de pliage (19) étant différentes.

3. Procédé selon la revendication 1 ou 2, **caractérisé en ce que** la première valeur de température se situe dans une plage de 5°C à 100°C.

4. Procédé selon l'une quelconque des revendications 1 à 3, **caractérisé en ce que** la deuxième valeur de température se situe dans une plage de 5°C à 100°C.

5. Procédé selon l'une quelconque des revendications 1 à 4, **caractérisé en ce que** la zone de pliage chauffée (62) de l'outil (60) présente un flanc chauffé électriquement, des canaux présentant un liquide régulé thermiquement, un émetteur d'infrarouges, un dispositif à induction ou un ventilateur à air chaud.

6. Procédé selon l'une quelconque des revendications 1 à 5, **caractérisé en ce que** la première et la deuxième valeur de température assurent une transition de température tolérable avec une déformation minimale de la section coudée du tube coudé (10).

7. Procédé selon l'une quelconque des revendications 1 à 6, **caractérisé en ce que**, dans l'étape d), pour le refroidissement du tube coudé (10), on utilise de l'air froid, un gaz liquide, un outil refroidi (60) ou de l'eau.

8. Procédé selon l'une quelconque des revendications 1 à 7, **caractérisé en ce que** la première et la deuxième valeur de température et le rayon de pliage sont adaptés l'un à l'autre et la rotondité du tube (10) est conservée, l'ovalité étant inférieure à 7%, de préférence inférieure à 5%, de manière particulièrement préférée inférieure à 3%.

9. Procédé selon l'une quelconque des revendications 1 à 8, **caractérisé en ce qu'**une face interne (22) et une face externe (24) du tube coudé (10) présentent une qualité de surface identique.

10. Procédé selon l'une quelconque des revendications 1 à 9, **caractérisé en ce que**, dans l'étape d), la zone de pliage (62) est soutenue à l'intérieur par un moyen auxiliaire.

11. Procédé selon la revendication 10, **caractérisé en ce que** le moyen auxiliaire est un mandrin, une pression gazeuse ou un matériau de remplissage antirayure résistant à la chaleur, en particulier des billes de verre ou d'acier.
